# EUROPEAN PATENT APPLICATION

(11) **EP 4 064 776 A1**
(43) Date of publication of application: **28.09.2022**
(21) Application number: 20913278.6
(22) Date of filing: 16.01.2020
(51) Int. Cl.: H04W 72/04, H04L 1/18

(54) **METHOD FOR DETERMINING HYBRID AUTOMATIC REPEAT REQUEST PROCESS INFORMATION, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: ZHAO, Zhenshan, Dongguan, Guangdong 523860 (CN); LU, Qianxi, Dongguan, Guangdong 523860 (CN)
(74) Representative: Taor, Simon Edward William
(86) International application number: PCT/CN2020/072508
(87) International publication number: WO 2021/142721

(57) **Abstract**

Disclosed is a method for determining hybrid automatic repeat request process information. The method comprises: a first terminal device determining, according to a first hybrid automatic repeat request (HARQ) process identifier indicated by a network device, a second HARQ process identifier corresponding to sidelink transmission. Further disclosed are a terminal device and a storage medium.

## Description

### Technical Field

The present application relates to the field of wireless communication technologies, in particular to a method for determining hybrid automatic repeat request process information, a device and a storage medium.

### Background

In a process of Sidelink (SL) transmission, when a terminal device has multiple Hybrid Automatic Repeat reQuest (HARQ) processes, there is no effective solution to determine a process identifier of an HARQ process.

### Summary

Embodiments of the present application provide a method for determining hybrid automatic repeat request process information, a device and a storage medium, which can determine process identifiers of HARQ processes when the terminal device has multiple HARQ processes.

In a first aspect, an embodiment of the present disclosure provides a method for determining hybrid automatic repeat request process information. The method includes: a first terminal device determines, according to a first HARQ process identifier indicated by a network device, a second HARQ process identifier corresponding to a sidelink transmission.

In a second aspect, an embodiment of the present application provides a terminal device including a processing unit, which is configured to determine a second HARQ process identifier corresponding to a sidelink transmission according to a first HARQ process identifier indicated by a network device.

In a third aspect, an embodiment of the present application provides a terminal device including a processor and a memory for storing a computer program that is executable on the processor, wherein the processor is configured to perform the acts of the method for determining hybrid automatic repeat request process information when executing the computer program.

In a fourth aspect, an embodiment of the present application provides a chip, including: a processor, configured to call a computer program from a memory and run the computer program to enable a device having the chip installed therein to perform the method for determining hybrid automatic repeat request process information.

In a fifth aspect, an embodiment of the present application provides a storage medium storing an executable program, and when the executable program is executed by a processor, the above method for determining hybrid automatic repeat request process information is implemented.

In a sixth aspect, an embodiment of the present application provides a computer program product, which includes computer program instructions, wherein the program instructions enable a computer to perform the method for determining hybrid automatic repeat request process information described above.

In a seventh aspect, an embodiment of the present application provides a computer program, which enables a computer to perform the method for determining hybrid automatic repeat request process information described above.

The method for determining hybrid automatic repeat request process information according to the embodiment of the present application includes the following acts: a first terminal device determines, according to a first HARQ process identifier indicated by a network device, a second HARQ process identifier corresponding to a sidelink transmission. In this way, there are multiple HARQ processes in the first terminal device, and the HARQ process identifiers of the multiple HARQ processes may be in conflict. The first terminal device can determine the second HARQ process identifier according to the usage of the first HARQ process identifier indicated by the network device, and solve the problem of data scheduling/transmission error caused by the conflict of multiple first HARQ process identifiers.

### Brief Description of Drawings

FIG. 1 is a schematic flowchart of selecting a transmission resource under a first mode of the present application.
FIG. 2 is a schematic flowchart of selecting a transmission resource under a second mode of the present application.
FIG. 3 is a schematic diagram of service transmission under unicast transmission mode of the present application.
FIG. 4 is a schematic diagram of service transmission under multicast transmission mode of the present application.
FIG. 5 is a schematic diagram of service transmission under broadcast transmission mode of the present application.
FIG. 6 is a schematic diagram of configuring multiple transmission resources by the network device of the present application.
FIG. 7 is a schematic diagram of service transmission under broadcast transmission mode of the present application.
FIG. 8 is a schematic diagram of an optional process flow of a method for determining hybrid automatic repeat request process information according to an embodiment of the present application.
FIG. 9 is an optional schematic diagram of a resource selection window according to an embodiment of the present application.
FIG. 10 is another optional schematic diagram of a resource selection window according to an embodiment of the present application.
FIG. 11 is a schematic diagram of a composition structure of a terminal device according to an embodiment of the present application.
FIG. 12 is a schematic diagram of a hardware structure of a terminal device according to an embodiment of the present application.

### Detailed Description

In order to understand features and technical contents of embodiments of the present application in more detail, realizations of the embodiments of the present application will be described in detail below in combination with accompanying drawings, which are for reference and description only, and are not intended to limit the embodiments of the present application.

Prior to the detailed description of the method of hybrid automatic repeat request process information provided by the embodiment of the present application, the related information of the embodiment of the present application is briefly described.

D2D communication is based on SL transmission technology. Different from a traditional cellular system in which communication data is received or transmitted through a base station, a D2D communication manner (that is, the manner of device-to-device direct communication) is adopted by the Internet of Vehicles system, thus having higher spectral efficiency and lower transmission latency. For D2D communication, the Third Generation Partnership Project (3GPP) defines two transmission modes: a first mode (also known as Mode A) and a second mode (also known as Mode B). The first mode is to allocate transmission resources for the terminal device by the network device, and the second mode is to select transmission resources independently by the terminal device.

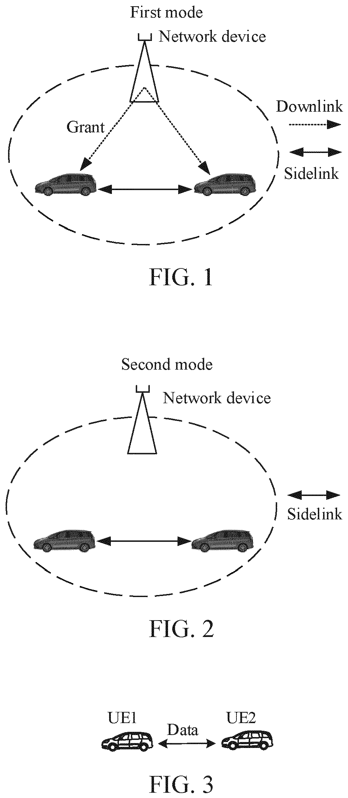

For the first mode, as shown in FIG. 1, a transmission resource of a terminal device is allocated by a network device, and the terminal device transmits data on the sidelink according to the resource allocated by the network device. The network device may allocate a resource of single transmission for the terminal device, or may allocate a semi-static transmission resource for the terminal device. Specifically, the network device may allocate a sidelink transmission resource for the terminal device in dynamic scheduling (Dynamic Grant, DG); or the network device may allocate sidelink Configured Grant (CG) transmission resource for the terminal.

For the second mode, as shown in FIG. 2, a terminal device selects a transmission resource in a resource pool to transmit data.

Transmission Mode 3 and Transmission Mode 4 are introduced in LTE-V2X, wherein Transmission Mode 3 corresponds to the above first mode, and Transmission Mode 4 corresponds to the above second mode.

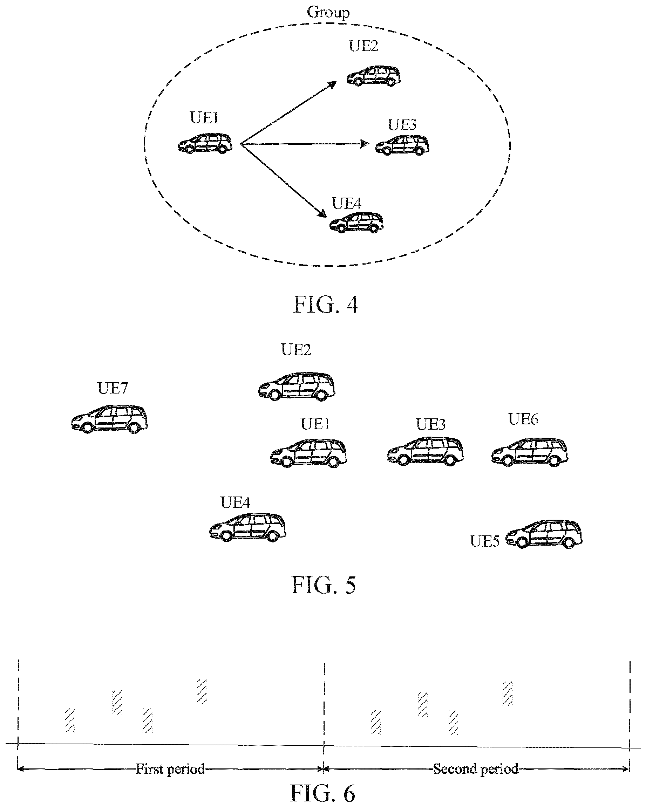

In NR-V2X, a broadcast transmission mode, a unicast transmission mode and a multicast transmission mode are supported. For the unicast transmission mode, as shown in FIG. 3, there is only one terminal device as the receiver end, and unicast transmission is performed between UE1 and UE2. For multicast transmission, the receiver end is all the terminal devices in a communication group, or all the terminal devices within a certain transmission distance. As for the multicast transmission mode, as shown in FIG. 4, UE1, UE2, UE3, and UE4 together form a communication group, wherein UE1 is a terminal device as a transmitter end for sending data, and UE2, UE3, and UE4 in the group are terminal devices as the receiver ends for receiving data. For the broadcast transmission mode, the receiver end may be any terminal device. As shown in FIG. 5, UE1 is the terminal device as the transmitter end for sending data, and other terminal devices around UE1, such as UE2, UE3, UE4, UE5, UE6 and UE7, are the terminal devices as the receiver ends for receiving data.

Sidelink CG will be briefly explained below.

The resource allocation of sidelink CG mainly includes two configured grant modes: type-1 configured grant and type-2 configured grant.

Type-1 configured grant: The network device configures a sidelink transmission resource for the terminal device through Radio Resource Control (RRC) signaling, and transmission parameters configured by the RRC signaling may include all transmission resources and transmission parameters including a time domain resource, a frequency domain resource, a Demodulation Reference Signal (DMRS), a Modulation and Coding Scheme (MCS), etc. After receiving the RRC signaling, the terminal device may use the transmission parameters configured by the RRC signaling to perform a sidelink transmission on the configured time-frequency resource.

Type-2 configured grant: A two-step resource allocation mode is adopted. First, transmission resources and transmission parameters are configured through RRC signaling, the transmission resources and transmission parameters include a period of time-frequency resource, a redundancy version, number of retransmissions, number of HARQ processes, etc. Then, Downlink Control Information (DCI) activates transmission of the type-2 configured grant, and configures other transmission resources and transmission parameters including a time domain resource, a frequency domain resource, MCS, etc. at the same time. When receiving the RRC signaling, the terminal device cannot immediately use the transmission resources and transmission parameters configured by the RRC signaling to perform a sidelink transmission. Instead, the sidelink transmission can be performed only after receiving the corresponding DCI and configuring other transmission resources and transmission parameters. In addition, the network device may further deactivate the configuration transmission through DCI, and when the terminal device receives the DCI indicating deactivation of the configuration, the terminal device can no longer use the transmission resource for the sidelink transmission.

If the network device allocates a sidelink transmission resource with configured grant to the terminal device, when the terminal device has sidelink data to transmit, the terminal device may directly use the sidelink transmission resource to perform a sidelink transmission without sending a Scheduling Request/Buffer Status Report (SR/BSR) to the network device to request transmission resource, thereby reducing transmission latency.

In sidelink configured grant, the network device allocates periodic transmission resources, and in each period, the network device may configure multiple transmission resources, as shown in FIG. 6, transmission resources with configured grant are periodically repeated, and four sidelink transmission resources are included in each period.

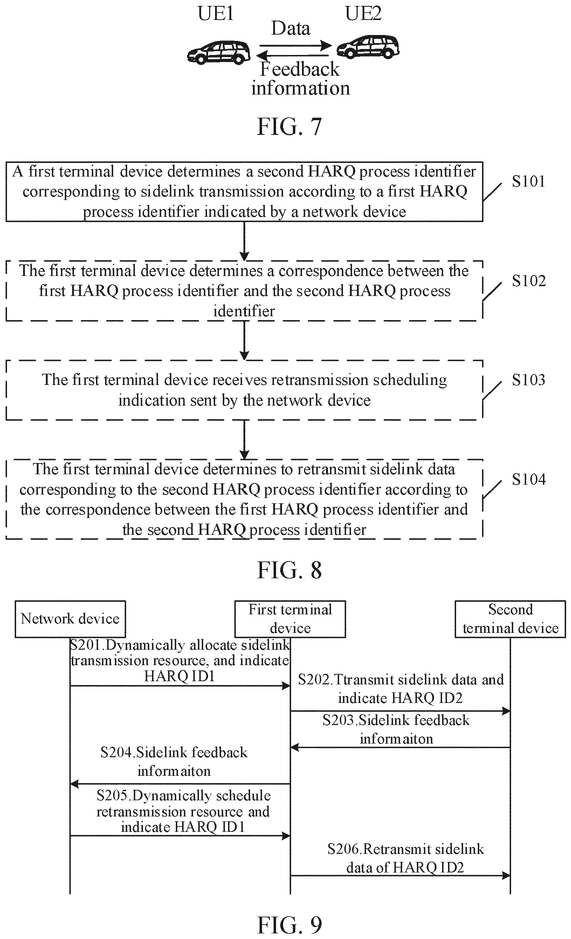

In NR-V2X, in order to improve the reliability of the system, a sidelink feedback channel is introduced. Provided is a schematic flowchart of sidelink feedback, as shown in FIG. 7, in the unicast transmission mode, a terminal device as a transmitter end transmits sidelink data (including a Physical Sidelink Control Channel (PSCCH) and a Physical Sidelink Share Channel (PSSCH)) to a terminal device as a receiver end, and the terminal device as the receiver end transmits feedback information, such as Hybrid Automatic Repeat reQuest (HARQ) feedback information, to the terminal device as the transmitter end. The terminal device as the transmitter end determines whether data retransmission is needed according to the feedback information of the terminal device as the receiver end. The HARQ feedback information is carried in a sidelink feedback channel such as a Physical Sidelink Feedback Channel (PSFCH). The terminal device as the transmitter end may decide whether the terminal device as the receiver end needs to send feedback information, for example, for broadcast communication, the terminal device as the receiver end does not need to send feedback information to the terminal device as the transmitter end. For unicast communication, in order to improve system reliability, the terminal device as the receiver end needs to send feedback information to the terminal device as the transmitter end. Specifically, the terminal device as the transmitter end carries indication information, which is used to indicate whether the terminal device as the receiver end needs to perform sidelink feedback, in the Sidelink Control Information (SCI).

In NR-V2X, if the terminal device may work in the first mode and the second mode at the same time, and each sidelink transmission corresponding to the first mode and the second mode respectively has a corresponding HARQ process. Since the network device neither knows how many HARQ processes of the second mode exist in the terminal device, nor knows the process identifier corresponding to the HARQ process of the second mode, the HARQ process identifier of the first mode indicated by the network device for the terminal device may conflict with a process identifier when the terminal device selects a resource autonomously in the second mode. In this scenario, there is no effective solution for the terminal device to determine the HARQ process identifier.

An embodiment of the present application provides a method for determining hybrid automatic repeat request process information, which may be applied to various communication systems, such as a global system of mobile communication (GSM) system, a code division multiple access (CDMA) system, a wideband code division multiple access (WCDMA) system, a general packet radio service (GPRS), a long term evolution (LTE) system, an LTE frequency division duplex (FDD) system, an LTE time division duplex (TDD) system, an advanced long term evolution (LTE-A) system, a new radio (NR) system, an evolution system of an NR system, an LTE-based access to unlicensed spectrum (LTE-U) system, an NR-based access to unlicensed spectrum (NR-U) system, a universal mobile telecommunication system (UMTS), a worldwide interoperability for microwave access (WiMAX) communication system, wireless local area networks (WLAN), wireless fidelity (WiFi), a next generation communication system or other communication systems, etc.

Generally speaking, the conventional communication system supports the limited quantity of connections, and is also easy to implement. However, with the development of communication technology, the mobile communication systems will not only support traditional communication, but also support, for example, D2D communication, the Machine to Machine (M2M) communication, the Machine Type Communication (MTC), or the Vehicle to Vehicle (V2V) communication, etc., and the embodiments of the present application may also be applied to these communication systems.

The network device involved in embodiments of the present application may be an ordinary base station (such as a NodeB, or an eNB, or a gNB), a new radio controller (an NR controller), a centralized unit, a new radio base station, a radio remote module, a micro base station, a relay, a distributed unit, a transmission reception point (TRP), a transmission point (TP), or any other device. The embodiments of the present application do not limit the specific technology and the specific device form used by the network device. For convenience of description, in all embodiments of the present application, the above-mentioned apparatuses for providing wireless communication functions for a terminal device are collectively referred to as the network device.

In embodiments of the present application, a terminal device may be any terminal, for example, the terminal device may be a user device for machine type communication. That is, the terminal device may be referred to as a User Equipment, a Mobile Station (MS), a mobile terminal, a terminal, etc. The terminal device may communicate with one or more core networks via a Radio Access Network (RAN). For example, the terminal device may be a mobile phone (or a "cellular" phone), a computer with a mobile terminal, etc. For example, terminal devices may be portable, pocket-size, handheld, computer-built, or vehicle-mounted mobile apparatuses, and they exchange voice and/or data with a radio access network. The terminal device is not specifically limited in the embodiments of the present application.

Optionally, the network device and the terminal device may be deployed on land, including indoors or outdoors, hand-held or vehicle-mounted; or may be deployed on a water surface; or may be deployed on a plane, a balloon, or a satellite in the air. The embodiments of the present application do not limit application scenarios of the network device and the terminal device.

Optionally, communications between a network device and a terminal device and between terminal devices may be performed through a licensed spectrum, or an unlicensed spectrum, or both, at the same time. Communications between the network device and the terminal device and between terminal devices may be performed through a spectrum below 7 gigahertz (GHz), or through a spectrum above 7GHz, or using both the spectrum below 7GHz and the frequency spectrum above 7Ghz at the same time. Embodiments of the present application do not limit spectrum resources used between the network device and the terminal device.

System architectures and service scenarios described in the embodiments of the present application are intended to illustrate the technical solutions of the embodiments of the present application more clearly, and do not constitute a limitation to the technical solutions provided by the embodiments of the present application. Those of ordinary skilled in the art may know that with evolvement of network architectures and emergence of new service scenarios, the technical solutions provided by the embodiments of the present application are also applicable to similar technical problems.

An optional process flow of a method for determining hybrid automatic repeat request process information provided by an embodiment of the present application, as shown in FIG. 8, includes the following acts.

In Act S101, a first terminal device determines a second HARQ process identifier corresponding to a sidelink transmission according to a first HARQ process identifier indicated by a network device.

In some embodiments, the first terminal device may be a sender device in a D2D communication system. The first HARQ process identifier may be an HARQ process identifier (ID) indicated when the network device allocates a sidelink transmission resource for the first terminal device.

The network device allocates the sidelink transmission resource to the first terminal device in two allocation modes, namely, dynamic allocation of sidelink transmission resource through DCI, and allocation of semi-static transmission resource through sidelink configured grant. In the mode of dynamic allocation of sidelink transmission resource, a network device indicates a first HARQ process identifier in DCI, and a first terminal device transmits PSCCH/PSSCH on the sidelink transmission resource allocated by the network device. In the sidelink data transmission, the first terminal device indicates the first HARQ process identifier to the second terminal device in the SCI, so that the second terminal device can perform data merging and feedback, etc. However, since the first terminal device may further perform sidelink data transmission in a manner of autonomously selecting a transmission resource at the same time, the first HARQ ID indicated by the network device to the first terminal device may have been used when the terminal device autonomously selects the transmission resource for data transmission. In this case, there are multiple HARQ processes in the first terminal device, and the HARQ process identifiers of the multiple HARQ processes may be in conflict. The method for determining hybrid automatic repeat request process information provided by an embodiment of the present application is described below with respect to the usage of the first HARQ process identifier indicated by the network device.

In some embodiments, the first terminal device determines that the second HARQ process identifier is equal to the first HARQ process identifier if the first HARQ process identifier is not used by the first terminal device. Herein, that the first HARQ process identifier is not used by the first terminal device may be that the first HARQ process identifier is not used when the first terminal device independently selects a transmission resource. Here, the quantity of first HARQ process identifiers indicated by the network device to the first terminal device may be one or multiple.

In some other embodiments, if the first HARQ process identifier is used by the first terminal device, the first terminal device determines that an unused HARQ process identifier other than the first HARQ process identifier is the second HARQ process identifier. Here, the quantity of first HARQ process identifiers indicated by the network device to the first terminal device may be one or multiple. It may be understood that regardless of the quantity of the first HARQ process identifiers, the first terminal device needs to confirm the quantity of process identifiers used by the first terminal device in the first HARQ process identifiers. Then the first terminal device determines an HARQ process identifier, which is not used by itself, to be the second HARQ process identifier. For example, the quantity of first HARQ process identifiers indicated by the network device to the first terminal device is N, and the first HARQ process identifiers are A₁, A₂, A₃, ... A_{N}, respectively. If K of the N first HARQ process identifiers have been used when the first terminal device selects the transmission resource autonomously (1 ≤ K ≤ N), the first terminal device may update or replace the N HARQ processes that have been used by using N HARQ process identifiers that are not used by the first terminal device. Or the first terminal device may select K unused HARQ process identifiers to update or replace K first HARQ process identifiers already used by the first terminal device, and the (N-K) unused first HARQ process identifiers remain unchanged.

In still some embodiments, the first terminal device determines an HARQ process to be terminated according to a first parameter when all HARQ processes supported by the first terminal device are used. The first terminal device determines that an HARQ process identifier corresponding to the HARQ process to be terminated is the second HARQ process identifier. Wherein, all HARQ processes supported by the first terminal device may be all HARQ processes for the sidelink transmission of the first terminal device.

Here, the first parameter may include a service quality parameter of data and/or a transmission mode of the data. The service quality parameter of the data includes at least one of the following: a data priority, data transmission latency, and data reliability.

Hereinafter, taking different contents included in the first parameter as examples, the processing procedures of determining the second HARQ process identifier by the first terminal device when all the HARQ processes supported by the first terminal device are used are explained.

### 1) The first parameter includes the data priority.

When the first parameter only includes the data priority, the first terminal device compares a priority of sidelink data transmitted by the first terminal device using the sidelink transmission resource corresponding to the first HARQ process identifier allocated by the network device with priorities of all the sidelink data currently transmitted. If the priority of the sideline data transmitted by first terminal device using the sidelink transmission resource corresponding to the first HARQ process identifier is higher than a priority of at least one sidelink data currently transmitted, the first terminal device terminates an HARQ process of the sidelink data with the lowest priority among the sidelink data currently transmitted. For example, if there is one first HARQ process identifier, and the priorities of two sidelink data in the sidelink data currently transmitted are lower than the priority of the sidelink data transmitted by the first terminal device using the sidelink transmission resource corresponding to the first HARQ process identifier, then the first terminal device terminates an HARQ process of the sidelink data with the lowest priority among the two sidelink data with low priorities currently transmitted, and takes an HARQ process identifier corresponding to the terminated HARQ process as the second HARQ process identifier. For another example, if there are two first HARQ process identifiers, and the priorities of two sidelink data in the current transmitted sidelink data are lower than the priority of the sidelink data transmitted by the first terminal device using the sidelink transmission resource corresponding to the first HARQ process identifier, then the first terminal device terminates the two sidelink data with low priorities currently transmitted, and takes HARQ process identifiers corresponding to the terminated HARQ processes as the second HARQ process identifiers.

### 2) The first parameter includes data transmission mode.

When the first parameter includes only data transmission mode, the first terminal device terminates an HARQ process of the sidelink data of the second mode currently transmitted. For example, the first terminal device may terminate an HARQ process of any sidelink data of the second mode currently transmitted, and take an HARQ process identifier corresponding to the terminated HARQ process as the second HARQ process identifier. For another example, the first terminal device may terminate an HARQ process of sidelink data with the lowest priority among the sidelink data of the second mode currently transmitted. The first terminal device takes an HARQ process identifier corresponding to the terminated HARQ process as the second HARQ process identifier. It may be understood that a priority of the sidelink data transmitted in the first mode is greater than that of the sidelink data transmitted in the second mode. Further, in the sidelink data transmitted in the second mode, the first terminal device may select an HARQ process of the sidelink data to be terminated according to the priorities of the sidelink data, and take an HARQ process identifier corresponding to the terminated HARQ process as the second HARQ process identifier.

### 3) The first parameter includes data transmission mode and data priority.

When there are the first parameter data transmission mode and data priority, the first terminal device compares a priority of sidelink data transmitted on the sidelink transmission resource corresponding to the first HARQ identifier allocated by the network device with priorities of all the sidelink data of the second mode currently transmitted. If a priority of at least one sidelink data of the second mode currently transmitted is lower than the priority of the sidelink data transmitted by the first terminal device using the sidelink transmission resource corresponding to the first HARQ identification, the first terminal device terminates an HARQ process corresponding to the sidelink data of the second mode with the lowest priority among the sidelink data currently transmitted, and takes an HARQ process identifier corresponding to the terminated HARQ process as the second HARQ process identifier. If the priorities of the sidelink data of the second mode currently transmitted are all higher than the priority of the sidelink data transmitted by the first terminal device using the sidelink transmission resource corresponding to the first HARQ identification, then no processing is performed, or the first terminal device terminates an HARQ process corresponding to sidelink data of the first mode with the lowest priority among the sidelink data currently transmitted, and takes an HARQ process identifier corresponding to the terminated HARQ process as the second HARQ process identifier.

It should be noted that the above three types of contents included in the first parameter are for example only, and other contents or combinations of other contents included in the first parameter are also applicable to the method for determining hybrid automatic repeat request process information according to the embodiment of the present application.

In some embodiments, when the first HARQ process identifier is used by the first terminal device or all HARQ processes supported by the first terminal device are used, the method for determining hybrid automatic repeat request process information may further include the following Act S102.

In Act S102, the first terminal device determines a correspondence between the first HARQ process identifier and the second HARQ process identifier.

In some embodiments, the method for determining hybrid automatic repeat request process information may further include the following Act S103.

In Act S103, the first terminal device receives a retransmission scheduling indication sent by the network device.

In some embodiments, the retransmission scheduling indication indicates the first HARQ process identifier, and a new data indicator field in the retransmission scheduling indication is not toggled.

Herein, the new data indicator field is not toggled means that a value of the new data indicator field in the retransmission scheduling indication does not change in relation to a value of the new data indicator field in a scheduling indication firstly transmitted.

In Act S104, the first terminal device determines to retransmit sidelink data corresponding to the second HARQ process identifier according to the correspondence between the first HARQ process identifier and the second HARQ process identifier.

The detailed process flow of the method for determining hybrid automatic repeat request process information according to the embodiment of the present application is described below based on FIG. 9.

In Act S201, a network device allocates a sidelink transmission resource for a first terminal device in a dynamic allocation mode, and indicates HARQ ID1.

In Act S202, the first terminal device transmits sidelink data to a second terminal device on the allocated sidelink transmission resource, and indicates HARQ ID2 in SCI.

In a specific implementation, if the HARQ ID1 indicated by the network device is not occupied by the first terminal device, then HARQ ID2=HARQ ID1. If the HARQ ID1 indicated by the network device has been occupied by the first terminal device, the first terminal device selects one of unoccupied HARQ process identifiers as HARQ ID2, and the first terminal device determines a correspondence between HARQ ID1 and HARQ ID2.

In Act S203, a second terminal device sends sidelink feedback information to the first terminal device.

In some embodiments, the sidelink feedback information may be HARQ ACK or HARQ NACK.

In Act S204, the first terminal device reports the sidelink feedback information to the network device.

In Act S205, when the sidelink feedback information is HARQ NACK, the network device dynamically schedules a retransmission resource for the first terminal device, and indicates HARQ ID1 in DCI, wherein the NDI field in the DCI is not toggled.

In Act S206, the first terminal device determines, according to the correspondence between the HARQ ID1 and the HARQ ID2, the retransmission scheduling of the sidelink data for the HARQ ID2; and the first terminal device retransmits the sidelink data of the HARQ ID2.

It should be noted that in the embodiment of the present application, the quantity of the first HARQ process identifiers may be one or multiple.

It should be understood that in various embodiments of the present application, sequence numbers in the various processes do not imply an order of execution of the various processes, which should be determined by their functions and internal logics, but should not constitute any limitation on implementation processes of the embodiments of the present application.

In the above-mentioned embodiments of the present application, when the network device allocates the sidelink configured grant (including the type-1 configured grant and the type-2 configured grant) for the first terminal device, the network device may configure multiple parallel sidelink configured grant transmission resources for the first terminal device.

In some embodiments, if a sidelink configured grant corresponds to an HARQ process identifier, the network device indicates an HARQ process identifier in the configuration information of the sidelink configured grant. For type-1 configured grant, the configuration information may be RRC signaling; for a type-2 configured grant, the configuration information may be RRC signaling or DCI.

In some other embodiments, if a sidelink configured grant corresponds to N HARQ process identifiers, where N is a positive integer greater than 1, the network device may indicate a sidelink configured grant resource corresponds to N HARQ process identifiers to the first terminal device in two modes. The following two modes are explained respectively.

Mode 1 The network device indicates a first HARQ process identifier with the smallest sequence number among the N HARQ process identifiers in the configuration information of the sidelink configured grant. The configuration information is further used to indicate the quantity of the first HARQ process. For example, the configuration information indicates the HARQ ID1 and the quantity number N of the first HARQ processes. Then the N HARQ process identifiers corresponding to the sidelink configured grant are N HARQ IDs starting from HARQ ID1. For example, if N=3 and HARQ ID1=1, the three HARQ process identifiers corresponding to the sidelink configured grant are 1, 2, and 3, respectively.

Mode 2 The network device indicates all the first HARQ process identifiers in the configuration information of the sidelink configured grant. For example, the network device indicates N HARQ process identifiers corresponding to the sidelink configured grant in the configuration information of the sidelink configured grant, and the N HARQ process identifiers may be consecutive or inconsecutive.

In the embodiment of the present application, the configuration information of the sidelink configured grant allocated by the network device for the first terminal device may include the Physical Uplink Control Channel (PUCCH) transmission resource, which is used for the first terminal device to feedback the sidelink feedback information to the network device, so as to facilitate the network device to allocate the retransmission resource. Since the sidelink transmission resource is a periodic resource, the PUCCH resource allocated by the network device to the first terminal device is also a periodic transmission resource. If one sidelink configured grant corresponds to N HARQ process identifiers, the network device may determine the HARQ process identifiers through time domain resource locations of the PUCCHs.

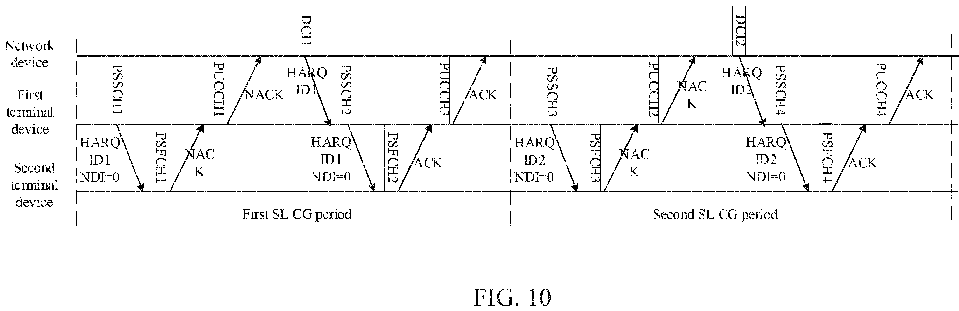

The detailed process flow of determining the HARQ process identifier by the network device through the time domain resource locations of the PUCCHs according to the embodiment of the present application is described below based on FIG. 10.

The network device configures the sidelink configured grant transmission resource for the first terminal device, and configures a PUCCH resource in each transmission period, and the PUCCH resource is used by the first terminal device to report the sidelink feedback information to the network device. The two transmission periods shown in FIG. 10 include PUCCH1 and PUCCH2. Because the time domain resources of PUCCH in different periods are different, the network device may determine an HARQ process identifier of the sidelink data corresponding to the sidelink feedback information carried by the PUCCH according to the received PUCCH. For example, the network device configures two HARQ process identifiers for the sidelink configured grant, namely HARQ ID1 and HARQ ID2. The network device receives the PUCCH1 on the first PUCCH resource, and may determine that the HARQ process identifier of the sidelink data corresponding to the sidelink feedback information carried by the PUCCH1 is HARQ ID1. The network device receives the PUCCH2 on the second PUCCH resource, and may determine that the HARQ process identifier of the sidelink data corresponding to the sidelink feedback information carried by the PUCCH2 is HARQ ID2.

The first terminal device transmits a new transmission of data on PSSCH1, HARQ ID1 is indicated in the SCI, and the NDI value is 0. The second terminal device fails to detect, and then feeds back the NACK information on the PSFCH1, the first terminal device receives the PSFCH1 to obtain the NACK information, and reports the NACK information to the network device on the PUCCH1. The network device allocates a retransmission resource for the first terminal device through DCI1, wherein the DCI1 indicates HARQ ID1 and NDI value being 1, and allocates an uplink transmission resource, i.e. transmission resource used by PUCCH3. The first terminal device receives DCI1 transmitted from the network, determines it is a retransmission schedule for sidelink data for HARQ ID1 based on HARQ ID1 and NDI information, and transmits PSSCH2 on the retransmission resource; the SCI indicates HARQ ID1 and NDI=0, wherein the value of NDI is not toggled with respect to the first transmission, thus indicating that it is retransmitted data. The second terminal device successfully detects and sends an ACK to the first terminal device, and the first terminal device sends PUCCH3 to the network to report the ACK information.

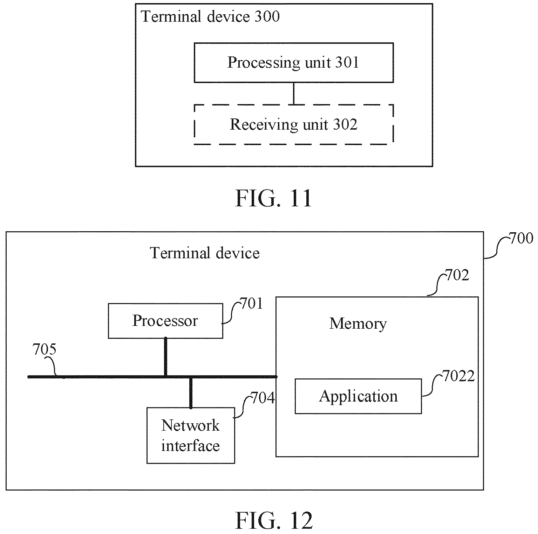

In order to achieve the method for determining hybrid automatic repeat request process information according to the embodiment of the present application, an embodiment of the present application provides a terminal device. As shown in FIG. 11, the composition structure of the terminal device 300 includes a processing unit 301, which is configured to determine a second HARQ process identifier corresponding to a sidelink transmission according to a first HARQ process identifier indicated by a network device.

In some embodiments, the second HARQ process identifier is equal to the first HARQ process identifier if the first HARQ process identifier is not used by the terminal device 300.

In some embodiments, the processing unit 301 is configured to determine an unused HARQ process identifier other than the first HARQ process identifier as the second HARQ process identifier if the first HARQ process identifier is used by the terminal device 300.

In some embodiments, the processing unit 301 is configured to determine an HARQ process to be terminated according to a first parameter when all HARQ processes supported by the terminal device 300 are used.

In some embodiments, the processing unit 301 is configured to determine that an HARQ process identifier corresponding to the HARQ process to be terminated is the second HARQ process identifier.

In some embodiments, the first parameter includes a service quality parameter of data and/or a transmission mode of the data.

In some embodiments, the service quality parameter of the data includes at least one of the following: a data priority, data transmission latency, and data reliability.

In some embodiments, the processing unit 301 is further configured to determine a correspondence between the first HARQ process identifier and the second HARQ process identifier.

In some embodiments, the terminal device 300 further includes: a receiving unit 302, which is configured to receive a retransmission scheduling indication sent by the network device, wherein the retransmission scheduling indication indicates the first HARQ process identifier, and a new data indicator field in the retransmission scheduling indication is not toggled.

In some embodiments, the processing unit 301 is further configured to determine to retransmit sidelink data corresponding to the second HARQ process identifier according to the correspondence between the first HARQ process identifier and the second HARQ process identifier.

In some embodiments, the first HARQ process identifier is indicated by DCI.

In some embodiments, the first HARQ process identifier is indicated by configuration information of sidelink configured grant.

In some embodiments, the configuration information is used to indicate a first HARQ process identifier with a smallest sequence number among at least two first HARQ process identifiers.

In some embodiments, the configuration information is further used to indicate the quantity of the first HARQ processes.

In some embodiments, the processing unit 301 is further configured to determine, according to the first HARQ process identifier with the smallest sequence number and the quantity of the first HARQ processes, other first HARQ process identifiers in the first HARQ process identifiers except the first HARQ process identifier with the smallest sequence number.

In some embodiments, the configuration information is used to indicate all of the first HARQ process identifiers.

An embodiment of the present application further provides a terminal device, including a processor and a memory for storing a computer program that is executable on the processor. The processor is configured to perform the acts of the method for determining hybrid automatic repeat request process information performed by the above terminal device when executing the computer program.

FIG. 12 is a schematic diagram of a hardware structure of a terminal device according to an embodiment of the present application. The terminal device 700 includes: at least one processor 701, a memory 702, and at least one network interface 704. Various components in the terminal device 700 are coupled together by a bus system 705. It may be understood that the bus system 705 is used for implementing connection and communication between these components. In addition to a data bus, the bus system 705 further includes a power bus, a control bus, and a status signal bus. However, for clarity, all kinds of buses are uniformly referred to as the bus system 705 in FIG. 12.

It can be understood that the memory 702 may be a volatile memory or a non-volatile memory, or may include both the volatile memory and the non-volatile memory. Herein, the non-volatile memory may be a Read Only Memory (ROM), a Programmable Read-Only Memory (PROM), an Erasable Programmable Read-Only Memory (EPROM), an Electrically Erasable Programmable Read-Only Memory (EEPROM), a ferromagnetic random access memory (FRAM), a Flash Memory, a magnetic surface memory, a compact disk, or a Compact Disc Read-Only Memory (CD-ROM); and the magnetic surface memory may be a magnetic disk memory or a magnetic tape memory. The volatile memory may be a Random Access Memory (RAM) which serves as an external cache. By way of illustrative but not restrictive explanation, many forms of RAMs are available, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), a Direct Rambus Random Access Memory (DRRAM). The memory 702 described in the embodiment of the present application is intended to include, but is not limited to, these and any other suitable types of memories.

The memory 702 in the embodiment of the present application is configured to store various types of data to support an operation of the terminal device 700. Examples of such data include any computer program for operating on the terminal device 700, such as an application program 7022. A program for implementing the method of an embodiment of the present application may be contained in the application program 7022.

Methods disclosed in above embodiments of the present application may be applied to the processor 701, or implemented by the processor 701. The processor 701 may be an integrated circuit chip with a signal processing capability. In an implementation process, the acts of the methods described above may be accomplished by integrated logic circuits of hardware in the processor 701 or instructions in a form of software. The above processor 701 may be a general purpose processor, a Digital Signal Processor (DSP), or other programmable logic devices, a discrete gate or transistor logic device, or a discrete hardware component, etc. The processor 701 may implement or execute various methods, acts, and logical block diagrams disclosed in the embodiments of the present application. The general purpose processor may be a microprocessor or any conventional processor or the like. The acts of the methods disclosed in embodiments of the present application may be directly embodied to be executed by a hardware decoding processor, or may be performed by a combination of hardware in the decoding processor and a software module. The software module may be located in a storage medium, and the storage medium is located in the memory 702. The processor 701 reads information in the memory 702 and accomplishes the acts of the aforementioned methods in combination with hardware thereof.

In an exemplary embodiment, the terminal device 700 may be implemented by one or more Application Specific Integrated Circuits (ASICs), DSPs, Programmable Logic Devices (PLDs), Complex Programmable Logic Devices (CPLDs), FPGAs, general-purpose processors, controllers, MCUs, MPUs or other electronic components, for executing the aforementioned methods.

An embodiment of the present application further provides a storage medium configured to store a computer program.

Optionally, the storage medium may be applied to the terminal device in an embodiment of the present application, and the computer program enables the computer to execute a corresponding flow in each method in an embodiment of the present application, which will not be repeated here for brevity.

An embodiment of the present application further provides a chip, including: a processor, configured to call a computer program from a memory and run the computer program to enable a device having the chip installed therein to perform the method for determining hybrid automatic repeat request process information.

An embodiment of the present application further provides a computer program product, which includes computer program instructions, wherein the program instructions enable a computer to perform the method for determining hybrid automatic repeat request process information described above.

An embodiment of the present application further provides a computer program, which enables a computer to perform the method for determining hybrid automatic repeat request process information described above.

The present application is described with reference to flowcharts and/or block diagrams of the methods, the devices (systems), and computer program products of the embodiments of the present application. It should be understood that each flow and/or block in the flowchart and/or block diagram, and combinations of flows and/or blocks in the flowchart and/or block diagram can be implemented by computer program instructions. These computer program instructions may be provided to a general purpose computer, a special purpose computer, an embedded processor or a processor of other programmable data processing device to produce a machine, such that the instructions which are executed by the computer or the processor of other programmable data processing device produce an apparatus for implementing the functions specified in one or more flows of the flowchart and/or one or more blocks of the block diagram.

These computer program instructions may also be stored in a computer-readable memory that can direct a computer or other programmable data processing device to operate in a specific manner, such that the instructions stored in the computer-readable memory produce an article of manufacture including an instruction apparatus that implements the functions specified in one or more flows of the flowchart and/or one or more blocks of the block diagram.

These computer program instructions may also be loaded onto a computer or other programmable data processing device, such that a series of operational acts are performed on the computer or other programmable device to produce a computer-implemented processing, thereby the instructions which are executed on the computer or other programmable device are used for implementing acts of the functions specified in one or more flows of the flowchart and/or one or more blocks of the block diagram.

It should be understood that the terms "system" and "network" in the present application are often used interchangeably herein. The term "and/or" in the present application describes an association relation between associated objects only, indicating that there may be three relations, for example, A and/or B may indicate three cases: A alone, both A and B, and B alone. In addition, the symbol "/" in the present application generally indicates that there is a "or" relationship between the associated objects before and after "/".

The above description is only the preferred embodiments of the present application, and is not intended to limit the protection scope of the present application. Any modification, equivalent substitution, improvement, or the like, made within the spirit and the principle of the present application shall be included within the protection scope of the present application.

## Claims

1. A method for determining Hybrid Automatic Repeat reQuest (HARQ) process information, comprising:
determining, by a first terminal device, a second HARQ process identifier corresponding to a sidelink transmission according to a first HARQ process identifier indicated by a network device.

2. The method of claim 1, wherein the second HARQ process identifier is equal to the first HARQ process identifier when the first HARQ process identifier is not used by the first terminal device.

3. The method of claim 1, wherein the first terminal device determines an unused HARQ process identifier other than the first HARQ process identifier as the second HARQ process identifier when the first HARQ process identifier is used by the first terminal device.

4. The method of claim 1, wherein the first terminal device determines an HARQ process to be terminated according to a first parameter when all HARQ processes supported by the first terminal device are used.

5. The method of claim 4, wherein the first terminal device determines that an HARQ process identifier corresponding to the HARQ process to be terminated is the second HARQ process identifier.

6. The method of claim 4 or 5, wherein the first parameter comprises a service quality parameter of data and/or a transmission mode of the data.

7. The method of claim 6, wherein the service quality parameter of the data comprises at least one of the following:
a data priority, data transmission latency, and data reliability.

8. The method of claim 3 or 5, further comprising:
determining, by the first terminal device, a correspondence between the first HARQ process identifier and the second HARQ process identifier.

9. The method of any one of claims 1 to 8, further comprising:
receiving, by the first terminal device, a retransmission scheduling indication sent by the network device, wherein the retransmission scheduling indication indicates the first HARQ process identifier, and a new data indicator field in the retransmission scheduling indication is not toggled.

10. The method of claim 9, further comprising:
determining, by the first terminal device, to retransmit sidelink data corresponding to the second HARQ process identifier according to the correspondence between the first HARQ process identifier and the second HARQ process identifier.

11. The method of any one of claims 1 to 10, wherein the first HARQ process identifier is indicated through Downlink Control Information (DCI).

12. The method of any one of claims 1 to 10, wherein the first HARQ process identifier is indicated by configuration information of sidelink configured grant.

13. The method of claim 12, wherein the configuration information is used to indicate a first HARQ process identifier with a smallest sequence number of at least two first HARQ process identifiers.

14. The method of claim 13, wherein the configuration information is further used to indicate a quantity of first HARQ processes.

15. The method of claim 14, further comprising:
determining, by the first terminal device, other first HARQ process identifiers in the first HARQ process identifiers except the first HARQ process identifier with the smallest sequence number according to the first HARQ process identifier with the smallest sequence number and the quantity of the first HARQ processes.

16. The method of claim 12, wherein the configuration information is used to indicate all of the first HARQ process identifiers.

17. A terminal device, comprising
a processing unit, configured to determine a second Hybrid Automatic Repeat reQuest (HARQ) process identifier corresponding to a sidelink transmission according to a first HARQ process identifier indicated by a network device.

18. The terminal device of claim 17, wherein the second HARQ process identifier is equal to the first HARQ process identifier when the first HARQ process identifier is not used by the terminal device.

19. The terminal device of claim 17, wherein the processing unit is configured to determine an unused HARQ process identifier other than the first HARQ process identifier as the second HARQ process identifier when the first HARQ process identifier is used by the terminal device.

20. The terminal device of claim 17, wherein the processing unit is configured to determine an HARQ process to be terminated according to a first parameter when all HARQ processes supported by the terminal device are used.

21. The terminal device of claim 20, wherein the processing unit is configured to determine that an HARQ process identifier corresponding to the HARQ process to be terminated is the second HARQ process identifier.

22. The terminal device of claim 20 or 21, wherein the first parameter comprises a service quality parameter of data and/or a transmission mode of the data.

23. The terminal device of claim 22, wherein the service quality parameter of the data comprises at least one of the following:
a data priority, data transmission latency, and data reliability.

24. The terminal device of claim 19 or 21, wherein the processing unit is further configured to determine a correspondence between the first HARQ process identifier and the second HARQ process identifier.

25. The terminal device of any one of claims 17 to 24, further comprising
a receiving unit, configured to receive a retransmission scheduling indication sent by the network device, wherein the retransmission scheduling indication indicates the first HARQ process identifier, and a new data indicator field in the retransmission scheduling indication is not toggled.

26. The terminal device of claim 25, wherein the processing unit is further configured to determine to retransmit sidelink data corresponding to the second HARQ process identifier according to the correspondence between the first HARQ process identifier and the second HARQ process identifier.

27. The terminal device of any one of claims 17 to 26, wherein the first HARQ process identifier is indicated through Downlink Control Information (DCI).

28. The terminal device of any one of claims 17 to 26, wherein the first HARQ process identifier is indicated by configuration information of sidelink configured grant.

29. The terminal device of claim 28, wherein, the configuration information is used to indicate a first HARQ process identifier with a smallest sequence number of at least two first HARQ process identifiers.

30. The terminal device of claim 29, wherein the configuration information is further used to indicate a quantity of first HARQ processes.

31. The terminal device of claim 30, wherein the processing unit is further configured to determine, according to the first HARQ process identifier with the smallest sequence number and the quantity of the first HARQ processes, other first HARQ process identifiers in the first HARQ process identifiers except the first HARQ process identifier with the smallest sequence number.

32. The terminal device of claim 28, wherein the configuration information is used to indicate all of the first HARQ process identifiers.

33. A terminal device, comprising a processor and a memory for storing a computer program that is runnable on the processor, wherein
the processor is configured to perform acts of the method for determining hybrid automatic repeat request process information according to any one of claims 1 to 16 when executing the computer program.

34. A chip, comprising a processor configured to call and run a computer program from a memory, to enable a device installed with the chip to perform the method for determining hybrid automatic repeat request process information according to any one of claims 1 to 16.

35. A storage medium storing an executable program that, when executed by a processor, performs the method for determining hybrid automatic repeat request process information according to any one of claims 1 to 16.

36. A computer program product, comprising computer program instructions that enable a computer to perform the method for determining hybrid automatic repeat request process information according to any one of claims 1 to 16.

37. A computer program enabling a computer to perform the method for determining hybrid automatic repeat request process information according to any one of claims 1 to 16.
